# EUROPEAN PATENT APPLICATION

(11) **EP 1 071 026 A2**
(43) Date of publication of application: **24.01.2001**
(21) Application number: 00115804.7
(22) Date of filing: 21.07.2000
(51) Int. Cl.: G06F 17/60

(54) **System and method for dealing of products and/or services**

(30) Priority: 21.07.1999 NL 1012659
(71) Applicant: Bongers, Cornelis Margaretha Theodorus Maria, 5707 KR Helmond (NL)
(72) Inventor: Bongers, Cornelis Margaretha Theodorus Maria, 5707 KR Helmond (NL)
(74) Representative: Verhees, Godefridus Josephus Maria

(57) **Abstract**

Providers (5) who offer products via websites are present on an open data network (3). Customers (13) can select desired products via these websites.

The system (1) according to the invention provides the option of executing the handling of products selected by customers (13) in a safe and anonymous manner. To this end the system (1) is outfitted with confirmation tools with which a customer can confirm a purchase intention regarding products he has selected.

After activation of the confirmation tools a provider-independent code is generated and executed toward the customer and the relevant providers.

The customer can now pay in whatever way he prefers by specifying the code. After payment the relevant providers are informed and they can deliver the products.

The system (1) is also equipped with distribution offices (41) where the delivery of the products to the customers and the payment by the customers can take place.

With this system no data on the customer need be given, so no keyboard is required.

## Description

### BACKGROUND OF THE INVENTION:

### Field of the invention

The invention relates to a system and working method for marketing products and/or services, more specifically a system and working method for marketing products and/or services via an open data network, for example the Internet.

### Prior art

A similar system and working method is known from the site of Bibit on the Internet (World Wide Web) http://www.bibit.nl/. The known system and the known working method function as follows: a customer chooses one or more products at a website of a provider on the Internet. If the customer decides that he wishes to purchase the selected products he confirms this in the system. For the payment of the products he has ordered the customer is passed on, automatically and without this being visible to him, to the known system. The system takes an order number from the provider and couples this with the order. Within the known system a series of payment methods are available from which the customer can choose. Once the payment has been concluded successfully, the known system passes this on via the Internet to the provider, who can then ship the product. The known system is available as a plug-in for e-commerce software.

The confirmation tools are tools for confirming the order. After the activation of these tools the party making the order enters his personal data, along with the manner of payment, and possibly the data for the execution of the payment. After this the order is executed and the order is passed on to the providers so that the products can be delivered.

The known system has a number of disadvantages. For the confirmation of an order the customer must also provide, in addition to a number of personal payment items such as for example his bank account number, such personal information as his name, address, town, telephone, e-mail address and the delivery address. This is undesirable for many customers since in this situation they cannot remain anonymous. This obligatory provision of personal information is highly unusual in terms of the traditional manner of buying products and/or services. In addition, it is often unclear for the customer for what this personal information is used, giving him at least a feeling of unease.

Because the transaction takes place via an open data network, i.e. a network that is accessible to everyone, it should be well secured in order to prevent abuse. A good security system is a familiar and major problem with regard to transactions via the Internet. By way of the progressive mathematical power of computers this security system must also be constantly adapted to the state of the art, in order to continue to prevent abuse. An additional disadvantage of such advanced technical security methods is that it is no longer clear for the average customer how these security methods work, undermining the necessary confidence with regard to ordering products and/or services via an open data network.

Another disadvantage of the known system is that a customer who wishes to place orders with various providers has to execute the payment steps after each order with a provider.

### Summary of the invention

An objective of the invention is to provide a system and working method for marketing products of the type described in the preamble in which the above-mentioned disadvantages are not present. In this context the system according to the invention is characterized in that the system comprises purchase intention tools for indicating a purchase intention regarding selected products and/or services on a site of one or more providers present on an open data network, in a virtual shopping cart related to this site, as well as collecting tools for collecting various site-related virtual shopping carts after a purchase intention is stated, confirmation tools for confirming the purchase intentions regarding selected products and/or services on one or more sites of one or more providers on an open data network, and code generation tools for generating a provider-independent code related to the selected products and/or services, and code execution tools for executing the generated code to a customer who has made and confirmed the selection.

The system works as follows. A customer consecutively selects products and/or services at various websites of various providers. After selecting products and/or services on a website, the customer makes his intention to purchase known to the system by activating the purchase intention tools. Then the system collects the virtual shopping cart from the site where the purchase intention was made known. After the customer has shopped at various sites he can confirm his purchase intentions by activating the confirmation tools. Then the system generates a code and executes this toward the customer. The customer can then pay for the selected products in any manner he chooses by specifying the code. Once the payment has been received the selected products can be delivered to the customer. The delivery address can, for example, be made known at the time of payment.

The order is not definitive until the payment of the total amount for the selected products and/or services. So accidentally confirming the selected products and/or services has no consequences. However, if desired and agreed in advance, the confirmation can also be interpreted as a definitive order with regard to which the customer does not pay until after receiving the ordered products and/or services. In this context the customer should make himself known in one way or another.

So with this system according to the invention products and/or services can be marketed without the customer having to release personal or payment data via the open data network. This makes transactions via this system 100% safe.

By the generation of a provider-independent code this system can be used to easily place orders with various providers that are combined and processed as one order.

The confirmation tools, code generation tools and code execution tools can be formed by a computer of the system that is provided with software and is connected to the open data network. These tools can be formed also - or instead - by a computer of a provider containing software of the system. In addition to or instead of this a computer of the system and/or of the provider that sends software to the computer of the user and installs the tools there can also form these tools.

New hardware such as Web-TV, and small computers such as handheld and palmtop pc's, are not well suited for the use of a keyboard. In the known system a customer must enter the information. Generally entering this information calls for the use of a keyboard. This makes the known system less suited for hardware that is in principle not meant to be served with a keyboard, such as Web-TV and small computers.

An embodiment of the system according to the invention that is particularly suited for use without a keyboard is characterized in that the confirmation tools comprise an indication area on a screen and can be activated by pointing to that indication area. In the execution of the steps for ordering products and/or services via the system according to the invention, the customer need not enter any data. The customer can specify products on a screen using indication tools such as a computer mouse or computer pen. The only other thing the customer has to do is to activate the confirmation tools. This can now be done easily by pointing to the indication area. For this reason in the system according to the invention no keyboard is necessary, such that the system is particularly advantageous to use with Web-TV and on small computers. However, in practice it can occur that first the system must be activated, after which the indication area of the confirmation tools appears on the screen. So the system is activated by simply indicating a system cone on the screen.

For the delivery of the ordered products and/or services the customer must provide a delivery address using the known system, thus making himself known. Capable of erasing this disadvantage and provide a system in which the customer can remain completely anonymous is an embodiment of the system according to the invention in which the system comprises distribution offices at which the delivery of the products and/or services to customers and/or the payment by customers can take place and where possibly customers can place orders.

The customer can indicate when paying that be wishes to pick up the ordered products and/or services from a distribution office. To do this he must make it known which distribution office is involved, after which the products and/or services are delivered there. The customer can then pick up the order at the distribution office after specifying the code. In addition, he can also pay at a distribution office, for example in cash, thus ensuring complete anonymity on the part of the customer.

Another embodiment of the system in which the delivery of ordered products - but then in terms of information - can take place in complete anonymity is characterized in that the distribution offices are equipped to supply customers with an access code for payment with which customers can acquire access to secured sites of providers on the open data network and/or download information from providers via the open data network.

The system preferably comprises storage tools for storing the code. For example the storage tools can be in the form of a storage area on a screen and can be activated by clicking on the storage area using indication tools. For example the indication tools can be in the form of a computer mouse, a computer joystick or a pen. The storage tools can, once they have been activated, for example store the code in the memory of the hardware used by the customer, for access to the open data network, or on an information medium, or can use a printer to print the code on paper.

The system according to the invention can also easily be made suitable for marketing valuable documents. Here documents include: fishing licenses, lottery tickets, registration certificates, tickets to events and the cinema, and CD's of audio, video and/or software. The known method in which these documents are marketed is via the post office, city offices or shops where a stock of these documents is kept. So each office and/or shop should be supplied, which is a costly business. In addition, the documents should be kept in stock at each office and/or shop.

An embodiment of the system according to the invention in which the distribution of valuable documents is faster, easier, and less expensive than via the known method, is characterized in that the system now comprises a central office and a closed data network through which the distribution offices are connected with the central office, in which a secured storage medium is present at the distribution offices, as well as a secured writer that can only be accessed through the closed data network by the central office, for writing information provided by the central office on the storage medium.

The concept of a closed data network can be understood to mean, for example, a telephone cable network in which a separate line is present between each distribution point and the central point A secured storage medium can be understood to mean a medium that is secured against imitations such as for example paper provided with a watermark, hologram and/or barcode, or a writable CD's provided with a barcode and/or hologram. A secured writer can be understood to mean a printer or a CD writer that can only be driven from the central point. If a printer is involved this can be provided with special ink that can for example be printed on the document.

As far as the working method for marketing products and/or services is concerned the invention is characterized in that the working method comprises the steps of collecting various site-related virtual shopping carts after a customer has announced a purchase intention on a site present on an open data network belonging to one or more providers, regarding selected products and/or services that are present in a virtual shopping cart related to this site, as well as generating a provider-independent code related to the selected products and/or services, after the customer has confirmed the purchase intention, and executing the generated code to the customer who has made and confirmed the selection, and checking whether the customer has paid, and informing the provider or providers once the customer has paid. Checking whether the customer has paid can also be understood to mean checking whether the customer in question has made an agreement in the context of which payment can take place by booking from an account of a credit balance of the customer in a depot or if an agreement has been made with the customer in question that he will not pay until he has received the ordered products.

For embodiments of the working method according to the invention reference is made to the claims.

### Brief description of the drawings

The invention will be elucidated more fully below on the basis of drawings in which an embodiment of the system according to the invention is shown. In these drawings:
Figure 1 is a schematic drawing of an embodiment of the system according to the invention; and
Figure 2 is a screen of a user of the system.

### Detailed description of the drawings

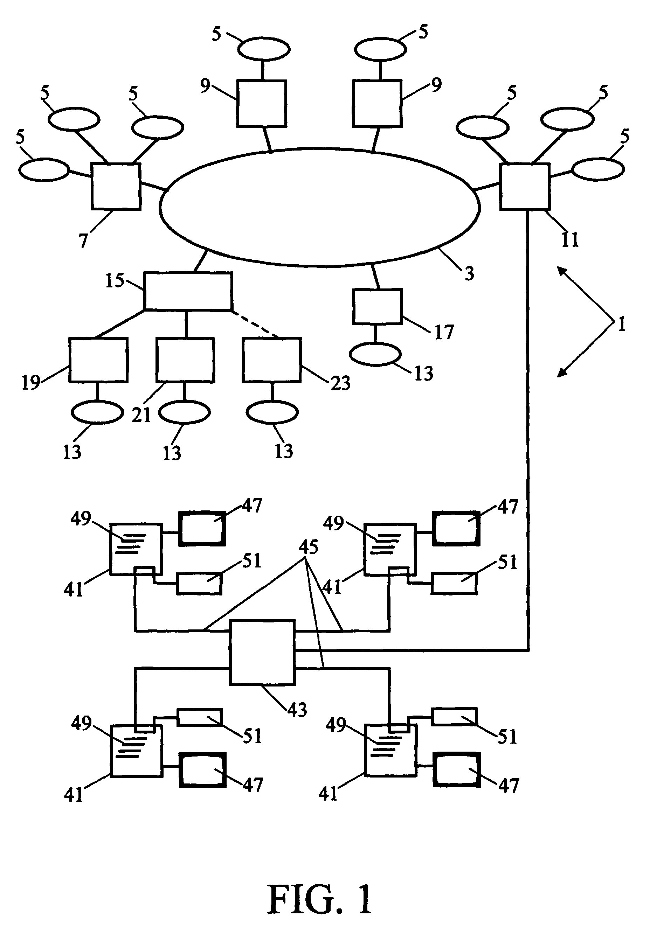

Figure 1 is a schematic drawing of an embodiment of the system according to the invention. The system 1 is provided with an open data network 3, for example the known Internet. Providers 5 are connected to the open data network via a computer 7 of a provider or via a single computer 9 or via a computer 11 of the system. The providers 5 offer their products and/or services via websites.

Customers 13 are also connected to the open data network 3 via a computer 15 of a provider or directly with a single computer 17. The customers 13 can be linked with their own computer 19 via the telephone network with the provider's computer 15. The customers 13 can also be connected with a special television 21, a so-called Web-TV, via the cable with the provider's computer 15. In addition, the customers can be coupled with a portable computer 23 via the air with the provider's computer. Via the websites of the providers 5 the customers 13 can select products and/or services that are offered for sale by the providers.

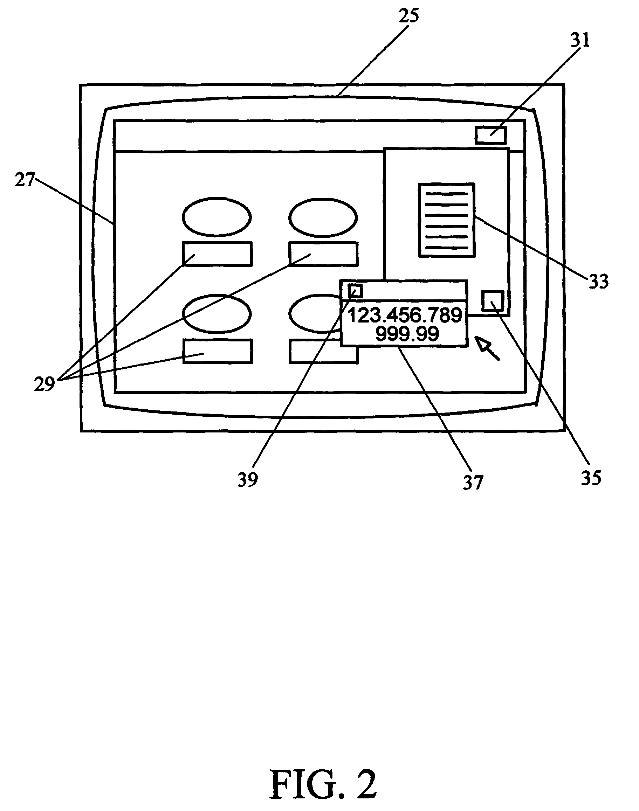

Figure 2 shows a screen 25 of a computer or Web-TV of a customer with the website 27 of a provider on it. Products and/or services can be selected easily by pointing to indication areas 29 on the screen 25. After the customer has chosen the desired products and/or services he can activate the system according to the invention by pointing to purchase intention tools 31 on the screen 25. After this the contents of the shopping cart 33 appear on the screen, and subsequently collection tools store the shopping cart.

The system has confirmation tools with which a customer can confirm the products and/or services he selects from one or more providers. The confirmation tools comprise an indication area 35 on the screen 25 and can be activated by pointing to this area. Indication tools include for example a computer mouse or computer pen or TV remote control unit.

Once the confirmation tools have been activated code generation tools generate a provider-independent code. The code generation tools can be formed by the computer 11 of the system 1 provided with system software, and/or by the computer 7 of the provider provided with system software, and/or by the computers 7 and 11 of the provider and/or of the system that send software to the computers 17, 19, 23 of the customers and install the tools there.

The generated code consists of a private portion and a public portion. The code execution tools then send the entire code to the relevant customer. The public portion of the code is sent to the relevant provider or providers. The code execution tools are executed in the same manner as the code generation tools and show the code in a presentation area 37 on the screen of the customer 25 and send the code to the relevant providers. In addition, the total price of the selected products and/or services is shown in the presentation area 37.

The code can be stored with the aid of storage tools. The storage tools comprise another indication area 39 on the screen 25 and can be activated by an indication in this area. The storage tools can store the code, after they have been activated, on an information medium or in a memory or can print the code on paper with the aid of a printer.

Now the customer can pay the total amount in any manner he chooses, specifying the public portion of the code. His payment is then entered together with the public portion of the code into the system, after which the provider or providers is/are informed that the ordered products and/or services can be delivered. This can for example be done automatically by the computer 11 of the system via the Internet.

The system 1 also comprises distribution offices 41, see Figure 1, where the delivery of the products and/or services by the providers to the customers and/or the payment by the customers to the providers can take place. The system also comprises a central office 43 and a closed data network 45 through which the distribution offices 41 are connected with the central office 43.

The delivery of the products and/or services can for example take place through one of the distribution offices 41. The customer can specify at the time of payment at which distribution office he wishes to pick up the ordered products, after which the products are sent to that office. Then after specifying the complete code the customer can receive the ordered products. The distribution office can check whether the complete code corresponds with the public portion of the code. This can prevent products from being picked up by unauthorized parties.

The distribution offices 41 are also supplied with screens 47 with which customers who themselves have no access to the open data network 3 can place orders.

In each distribution office 41 there is also a secured storage medium 49, for example paper or CD with a hologram, and a secured writer 51, for example a printer or CD writer. The writer 51 can only be driven via the closed data network 45 by the central office 43. From a distribution office 41 it can be passed on which information is required. The central office 43 then passes on the information via the closed data network 45 to the writer 51, which then writes this information on the storage medium 49.

Although in the foregoing the invention is explained on the basis of drawings, it should be stressed that the invention is in no way limited to the embodiment shown in the drawings. The invention also extends to all embodiments deviating from the embodiment shown in the drawings within the context defined by the claims. For example the system can also be executed without distribution offices and the providers can also each offer their products and/or services for sale via their own sites in the system.

## Claims

1. System for marketing products and/or services, characterized in that the system comprises purchase intention tools for indicating a purchase intention regarding selected products and/or services on a site of one or more providers present on an open data network, in a virtual shopping cart related to this site, as well as collecting tools for collecting various site-related virtual shopping carts after a purchase intention is stated, confirmation tools for confirming the purchase intentions regarding selected products and/or services on sites of one or more providers on an open data network, and code generation tools for generating a provider-independent code related to the selected products and/or services, and code execution tools for executing the generated code to a customer who has made and confirmed the selection.

2. System according to claim 1, characterized in that the code-generation tools are executed such that they generate a code that consists of a private portion and a public portion.

3. System according to claim 1 or 2, characterized in that the system comprises distribution offices where the delivery of the products and/or services to the customers and/or the payment by the customers can take place and where customers may place their orders.

4. System according to claim 3, characterized in that the distribution offices are equipped to provide the customer an access code for payment with which code the customer can obtain access to secured sites of providers on the open data network and/or download information from providers via the open data network.

5. System according to one of the preceding claims, characterized in that the system also comprises a central office and a closed data network through which the distribution offices are connected with the central office, in which the distribution offices have a secured storage medium, as well as a secured writer that can only be driven via the closed data network by the central office, for writing information provided by the central office onto the storage medium.

6. Working method for marketing products and/or services, characterized in that the working method comprises the steps of collecting various site-related virtual shopping carts after a customer has announced a purchase intention on a site present on an open data network belonging to one or more providers, regarding selected products and/or services that are present in a virtual shopping cart related to this site, as well as generating a provider-independent code related to the selected products and/or services, after the customer has confirmed the purchase intention, and executing the generated code to the customer who has made and confirmed the selection, and checking whether the customer has paid, and informing the provider or providers once the customer has paid

7. Working method according to claim 6, characterized in that products and/or services ordered from a provider or providers are received at a distribution office and that at the distribution office the products and/or services are given to the customer.

8. Working method according to claim 6 or 7, characterized in that payments and/or orders by customers are received at the distribution offices.

9. Working method according to claim 6, 7 or 8, characterized in that at the distribution offices customers are access given codes against payment with which the customers can obtain access to secured sites of providers on the open data network and/or can download information from providers via the open data network

10. Working method according to one of the preceding claims 6 through 9, characterized in that from a central office via a closed data network information ordered by customers is sent to distribution offices, which information is stored at the distribution offices on a secured storage medium.
